Europäisches Patentamt

(19) European Patent Office

Office européen des brevets

(11) Publication number: **0 100 872**
A2

(12) **EUROPEAN PATENT APPLICATION**

(21) Application number: **83106632.9**

(22) Date of filing: **06.07.83**

(51) Int. Cl.³: **G 09 G 1/14**
G 09 G 1/16, G 06 K 15/10

(30) Priority: **13.07.82 JP 121925/82**

(43) Date of publication of application:
**22.02.84 Bulletin 84/8**

(84) Designated Contracting States:
**DE FR GB IT**

(71) Applicant: **Shinko Electric Co. Ltd.**
**12-2, Nihonbashi 3-chome**
**Chuo-ku Tokyo(JP)**

(71) Applicant: **KANZAKI PAPER MANUFACTURING CO., LTD**
**9-8 Yonchome Ginza Chuo-ku**
**Tokyo 104(JP)**

(72) Inventor: **Kawai, Hirokazu c/o Shinko Electric Co., Ltd.**
**Ise Kohjoh No. 100, Takegahana-cho**
**Ise-shi Mie-ken(JP)**

(72) Inventor: **Wakai, Osamu c/o Kanzaki Paper Mfg. Co., Ltd.**
**Kanzaki Kohjoh No. 11, Johkoujimotomachi 1-chome**
**Amagasaki-shi Hyogo-ken(JP)**

(74) Representative: **Hallam, Arnold Vincent et al,**
**E.N. LEWIS & TAYLOR 144 New Walk**
**Leicester LE1 7JA(GB)**

(54) **Apparatus for and method of enlarging character pattern.**

(57) There is disclosed an apparatus for and a method of enlarging character patterns. A fundamental character pattern representative of a character to be enlarged and composed of a dot-matrix is produced, wherein the character is represented by vertical strokes, horizontal strokes and strokes oriented at an angle of 45° with respect to the vertical and horizontal strokes. A square pattern composed of four adjacent dot elements is formed in accordance with each enlarging dot element of the fundamental character pattern. An enlarged partial pattern is read out of a storage device into which all kinds of enlarged partial patterns have previously been stored. Each enlarged partial pattern in the storage device is predetermined in accordance with the corresponding square pattern and magnifying rate. The enlarged partial patterns read out of the storage device are combined together so that an enlarged character pattern is formed.

FIG. 4

EP 0 100 872 A2

1.

TITLE OF THE INVENTION

APPARATUS FOR AND METHOD OF ENLARGING
CHARACTER PATTERN

BACKGROUND OF THE INVENTION

(a)  Field of the Invention

This invention relates to an apparatus and method of
enlarging a character pattern represented by a dot-matrix
for a data output equipment such as a printer, CRT display
or the like.

(b)  Prior art

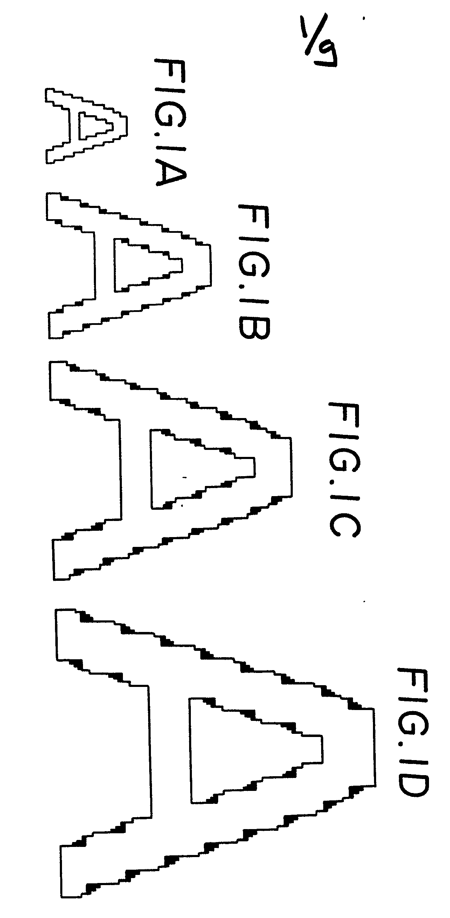

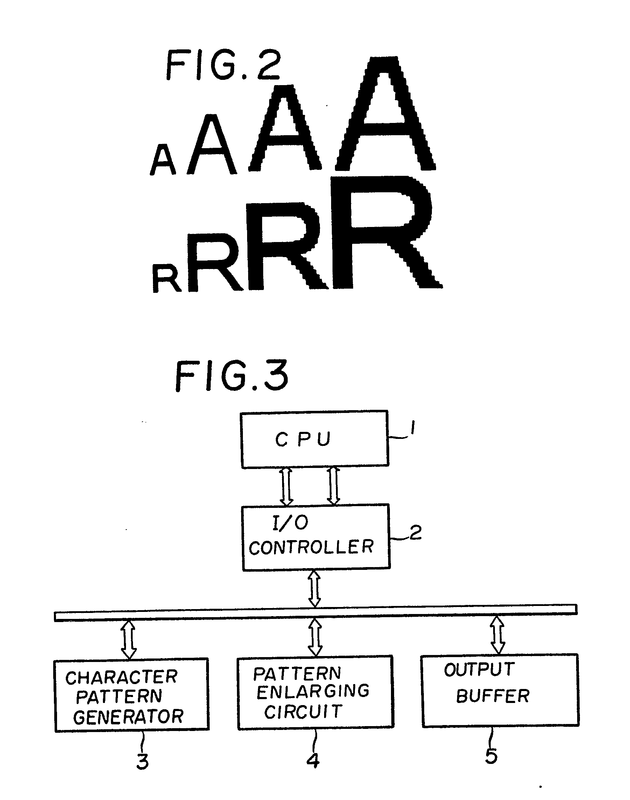

Generally in a data output equipment under considera-
tion, fundamental character patterns corresponding to
characters to be printed or displayed are previously stored
in a memory, and when it is desired to print or display
a large character, one of the fundamental character
patterns corresponding to the desired large character is
read out of the memory and enlarged.  Conventionally,
there has been proposed an enlarging method of this kind
in which dots or elements of a fundamental character
pattern are sequentially extracted so that a pattern is
formed by each element of the fundamental character pattern
and eight elements surrounding it.  An enlarged partial
pattern corresponding to the element to be enlarged is
generated in accordance with the pattern composed of the
above-mentioned nine elements.  Then an enlarged character
pattern is formed by combining enlarged partial patterns together. However, this method has such a drawback that an outline of an enlarged character is rendered rugged or uneven particularly at its slant stroke portions. There is shown this drawback in Figs.1A to 1D from which it is apparent that the outlines of the enlarged characters illustrated in Figs.1B, 1C and 1D are uneven. The portions of the character indicated as shadows in these figures are additional elements constituted by above-mentioned method. Fig.2 also shows the drawback of the conventional method in which characters "A" and "R" and their enlarged characters at the magnifying rates of "2", "3" and "4" are illustrated. In order to overcome the drawback mentioned 'above, each enlarged partial pattern must be produced from a pattern composed of more than nine elements. With this method, however, a hardware and software for performing the above-mentioned enlarging processing become further complicated.

SUMMARY OF THE INVENTION

It is therefor an object of the present invention to provide a method of enlarging character patterns in which enlarged character patterns having smooth outlines are obtained.

Another object is to provide such a method in which a character enlarging processing can be performed in a quite short time.

A further object is to provide an apparatus for enlarging character patterns in which enlarged character patterns having smooth outlines are printed or displayed.

3.

According to one aspect of the present invention, there is provided an apparatus for enlarging character patterns which comprises character pattern generating means for generating a fundamental character pattern representative of a character to be enlarged and composed of a dot-matrix in which the character is represented by vertical strokes, horizontal strokes and slant strokes oriented at an angle of 45° with respect to the vertical and horizontal strokes; square pattern forming means for forming a square pattern in accordance with each dot element of the fundamental character pattern, the square pattern being composed of four adjacent dot elements one of which is to be enlarged; storage means for previously storing an enlarged partial pattern with respect to each kind of the square patterns, each enlarged partial pattern being predetermined in accordance with the corresponding square pattern and a magnifying rate; means for reading the enlarged partial pattern out of the storage means in accordance with the square pattern and magnifying rate; and means for combining the enlarged partial patterns read out of the storage means so that an enlarged character pattern corresponding to the fundamental character pattern is formed.

The foregoing and other objects, the features and the advantages of the present invention will be pointed out in, or apparent from, the following description of the preferred embodiment considered together with the accompanying drawings.

0100872

## BRIEF DESCRIPTION OF THE DRAWINGS

Fig.1A is an illustration showing one example of fundamental character patterns;

Figs.1B, 1C and 1D are illustrations showing the enlarged character patterns obtained from the character pattern of Fig.1A by a conventional method;

Fig.2 is an illustration showing fundamental character patterns and the enlarged ones obtained from the same by a conventional method;

Fig.3 is a block diagram of an apparatus for enlarging character patterns according to the present invention;

Fig.4 is an illustration showing a fundamental character pattern of an Arabic numeral "9";

Fig.5 is a block diagram of a pattern enlarging circuit of Fig.3;

Fig.6A is an illustration showing a dot-matrix of a fundamental character pattern;

Fig.6B is an illustration showing the relations between an element AO to be enlarged and enlarged partial patterns 2AO, 3AO and 4AO;

Figs.7A-(1) to 7A-(16) are illustrations showing square patterns GO in various states;

Fig.7B-(1) to 7B-(16) are illustrations showing enlarged, partial patterns 2AO corresponding to the elements AO of Figs.7A-(1) to 7A-(16), respectively;

Figs.7C-(1) to 7C-(16) are illustrations showing enlarged partial patterns 3AO corresponding to the elements AO of Figs.7A-(1) to 7A-(16), respectively;

5.

Figs.7D-(1) to 7D-(16) are illustrations showing enlarged partial patterns 4AO corresponding to the elements AO of Figs.7A-(1) to 7A-(16), respectively;

Fig.8A is an illustration showing the square pattern GO stored in an address register AR;

Figs.8B, 8C and 8D are illustrations showing respectively the enlarged partial patters 2AO, 3AO and 4AO stored in shift registers R11, R12, R13 and R14;

Figs.9A-(1) to 9(A)-(10) are illustrations showing a requential change of the contents of input shift registers R1 and R2 and the address register AR during an enlarging processing;

Figs.9B-(1) to 9B-(9) are illustrations showing the sequential change of the contents of the registers R11, R12, R13 and R14 during the enlarging processing;

Figs.9C-(1) to 9C-(9) are illustrations showing the sequential change of the contents of the output shift registers R21, R22, R23 and R24 during the enlarging processing;

Fig.9D is an illustration showing the sequential change of the contents of an output buffer 5 during the enlarging processing;

Fig.10 is a flow chart showing the enlarging processing;

Fig.11A is an illustration showing the fundamental character pattern of an Arabic numeral "9"; and

Fig.11B is an illustration showing an enlarged character pattern obtained from the character pattern of Fig.11A.

DETAILED DESCRIPTION OF THE PREFERRED EMBODIMENT

A preferred embodiment according to the present invention will now be described with reference to the accompanying drawings.  Referring now to Fig.3 which shows a schematic block diagram of an apparatus for enlarging character patterns.  In this figure, a reference numeral 1 denotes a  microprocessor unit (hereinafter referred to as "CPU") such as the 8085 integrated circuit module manufactured by Intel Corporation.  This CPU controls each of a character pattern generator 3 and pattern enlarging circuit 4 through an I/O controller 2.in accordance with programs stored in program memories (not shown).  Under control of the CPU1, the character pattern generator 3 generates a fundamental caracter pattern composed of a 16x16 dot-matrix and representing  a  character to be displayed or printed.

A data representative of the fundamental character pattern is delivered to the pattern enlarging circuit 4. This pattern enlarging circuit 4 produces a plurality of enlarged partial patterns at a predetermined magnifying rate in response to the data.  Then the enlarged partial patterns are stored into an output buffer 5. The enlarged partial patterns thus accumulated in the output buffer 5 are then fed to a display device or a printer and displayed or printed thereon.

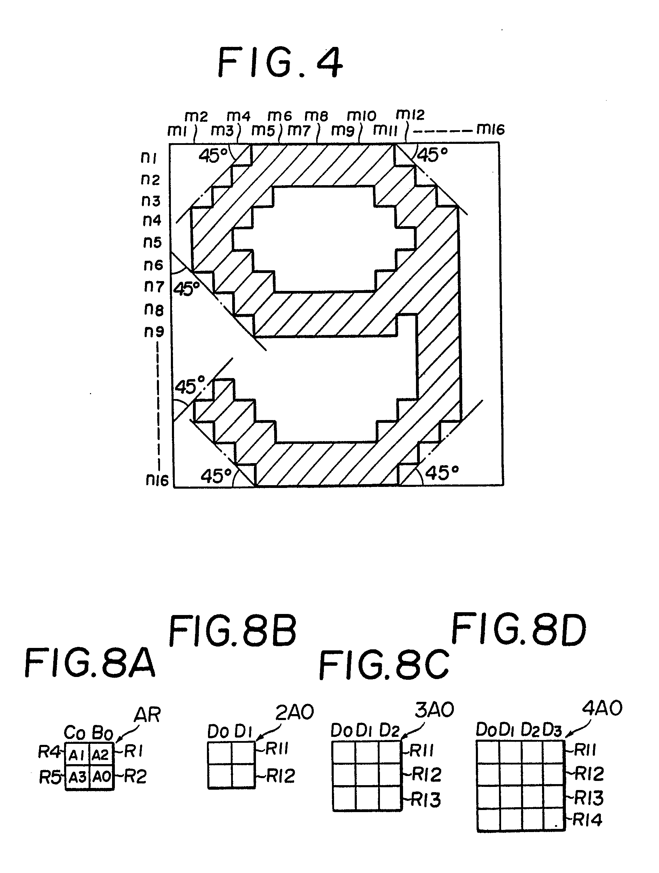

Fig.4 illustrates one example of the fundamental character patterns provided in the character pattern generator 3, wherein an Arabic numeral "9" is indicated.  As shown in this figure, each fundamental character pattern is represented by a dot-matrix composed it 16 rows n1 to n16 and 16

columns m1 to m16, and a character pattern in each dot-matrix is composed of horizontal strokes, vertical strokes and strokes oriented at an angle of 45° with respect to the horizontal and vertical strokes.

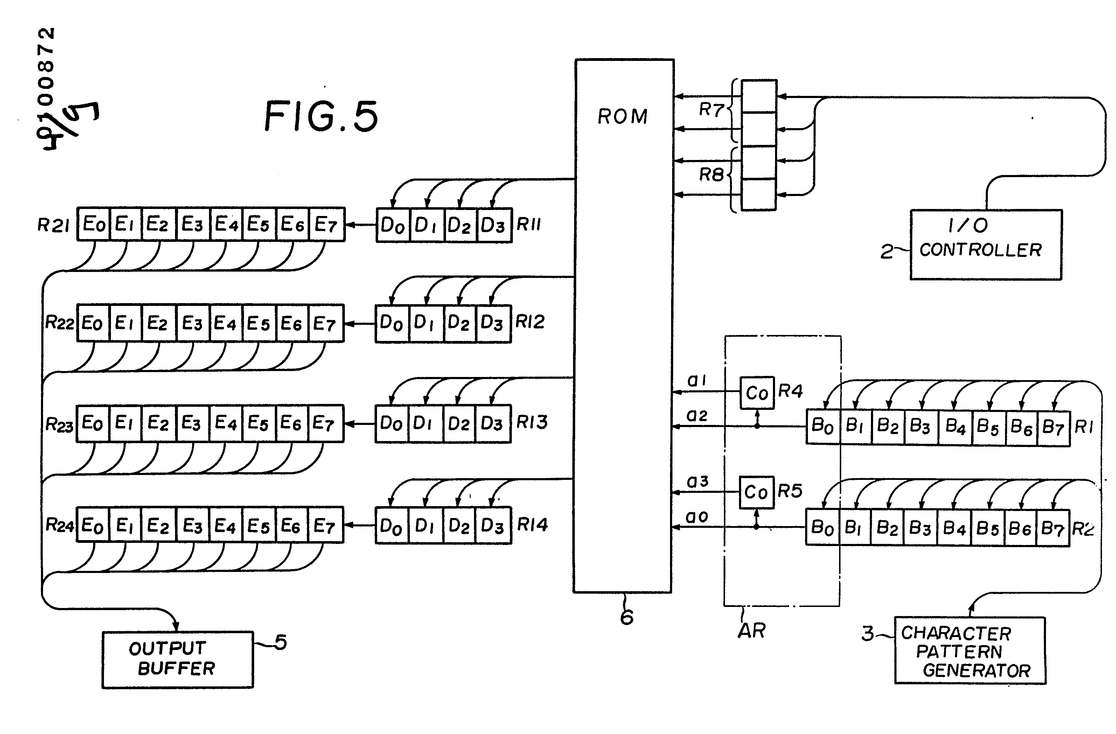

Fig. 5 shows a construction of the pattern enlarging circuit 4. In this figure, reference characters R1 and

R2 denote eight-stage input shift registers, respectively.

And output data of the character pattern generator 3, which represents each row of a fundamental character pattern, is loaded into each group of the stages B0 to B7 of the

registers R1 and R2 on an 8-bit bases. The output signals

a2 and a0 of the last stages B0 of the registers R1 and R2

are shifted into one-bit registers R4 and R5, respectively.

In this case, the last stages B0 of the registers R1 and R2

cooperate with the registers R4 and R5 to form a four-bit address register AR, and the output signals a1, a2, a3 and

a0 of this address register AR are supplied to the lower four-bit part of address input terminals of a ROM 6.

Two-bit registers R7 and R8 are provided for determinin- ing desired magnifying rates in the horizontal and vertical directions, respectively, and output signals of these resisters R7 and R8 are supplied to the upper four-bit part of the address input terminals of the ROM 6. The ROM 6, which has a capacity of 256 sixteen-bit locations, supplies its read-out data (sixteen-bit data) of a location, accessed by the output signals of the registers R7, R8 and AR, to

stages D0 to D3 of each four-stage shift registers R11 to

R14. And an output signal of each last stage DO of the registers R11 to R14 is shifted into a respective first stage E7 of eight-stage output shift registers R21 to R24. The contents of the fully-loaded shift registers R21 to R24 are then transferred to the output buffer 5 on an eight-bit basis.

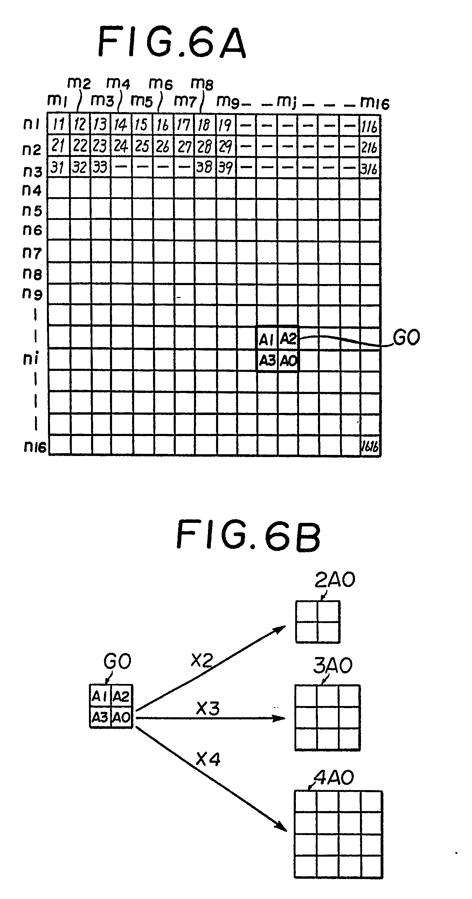

Fig.6A again illustrates the 16x16 dot-matrix provided in the character generator 3 and representing a fundamental character pattern. In this figure, each dot or element is represented in such a manner that the first element defined by the row n1 and column m1 is denoted by a numeral 11, the second element defined by the row n1 and column m2 is denoted by a numeral 12, ···, the element defined by the row ni and column mj is denoted by a numeral ij and so on. Further in this figure, an element indicated by a reference characters AO represents an element which is under processing for enlargement. And a regular square pattern GO, which is composed of four adjacent elements and includes the element AO at the bottom right corner thereof, represents an area to be used for producing an enlarged partial pattern of the element AO. In this embodiment, the square patterns GO respectively corresponding to the elements 11 to 1616 are formed sequentially, and an enlarged partial pattern corresponding to each element AO is produced taking consideration of the corresponding square pattern GO. Then the enlarged partial patterns thus obtained are combined together in the output buffer 5 so that a desired enlarged character pattern is formed.

9.

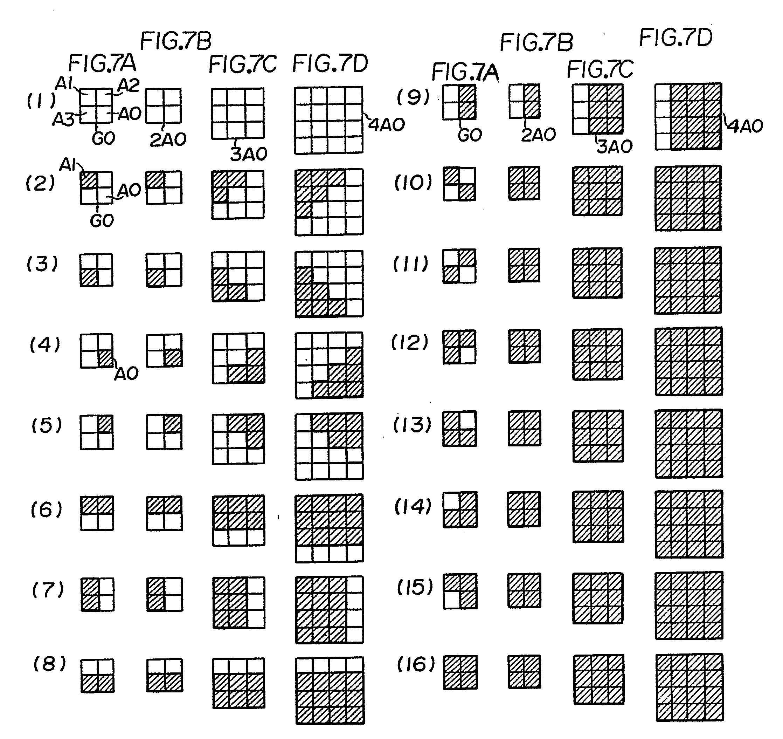

Fig.6B shows the relation between an element AO in a square pattern GO and enlarged partial patterns 2AO, 3AO and 4AO, in which the enlarged partial pattern 2AO represents a two times magnification of the element AO, the enlarged partial pattern 3AO represents a three times magnification of the element AO and the enlarged partial pattern 4AO represents a four times magnification of the element AO. Each of the enlarged partial patterns 2AO, 3AO and 4AO is determined according to the contents of the square pattern GO, i.e., the binary states of the four elements AO, Al, A2 and A3. Figs.7A to Fig.7D show how the enlarged partial patterns 2AO, 3AO and 4AO are determined. All the states of the square pattern GO are illustrated in Figs.7A-(1) to 7A-(16), and enlarged partial patterns 2AO corresponding to the square patterns GO of Figs.7A-(1) to 7A-(16) are illustrated in Figs.7B-(1) to 7B-(16), and enlarged partial patterns 3AO corresponding to the square patterns GO of Figs.7A-(1) to 7A-(16) are illustrated in Figs.7C-(1) to 7C-(16), and enlarged partial patterns 4AO corresponding to the square patterns GO of Figs.7A-(1) to 7A-(16) are illustrated in Figs.7D-(1) to 7D-(16). As shown in these figures. Enlarged partial patterns 2AO to 4AO depend not only upon a binary state, i.e. white or black, of the corresponding element AO but also upon binary states of the corresponding elements Al, A2 and A3. For example, in the case where a white element AO in a square pattern GO (Fig.7A-(2)) having one black element at its top left corner is enlarged twofold, a pattern 2AO with one black element at the top left corner thereof as shown in FIG.7B-(2) is generated instead of a pattern composed of four white elements. Also in the case where the above-mentioned element AO is enlarged three times, a pattern 3AO having three adjacent black elements at the top left corner thereof as shown in Fig.7C-(2) is generated. Also in the case where the above-mentioned element AO is enlarged four times, a pattern 4AO having six adjacent black elements at the top left corner thereof as shown in Fig.7D-(2) is generated. On the other hand, in the case where a black elements AO in a square pattern GO having three white elements shown in Fig.7A-(4) is enlarged twofold, a pattern 2AO with only one black element at its bottom right corner, which is shown in Fig.7B-(4), is generated instead of a pattern composed of four black elements. In the case where the above-mentioned element AO is enlarged three times a pattern 3AO having three adjacent black elements at the bottom right corner thereof is generated as shown in Fig.7C-(4). And in the case where the above-mentioned element AO is enlarged four times, a pattern 4AO having six adjacent black elements at its bottom right corner is generated as shown in Fig.7D-(4).

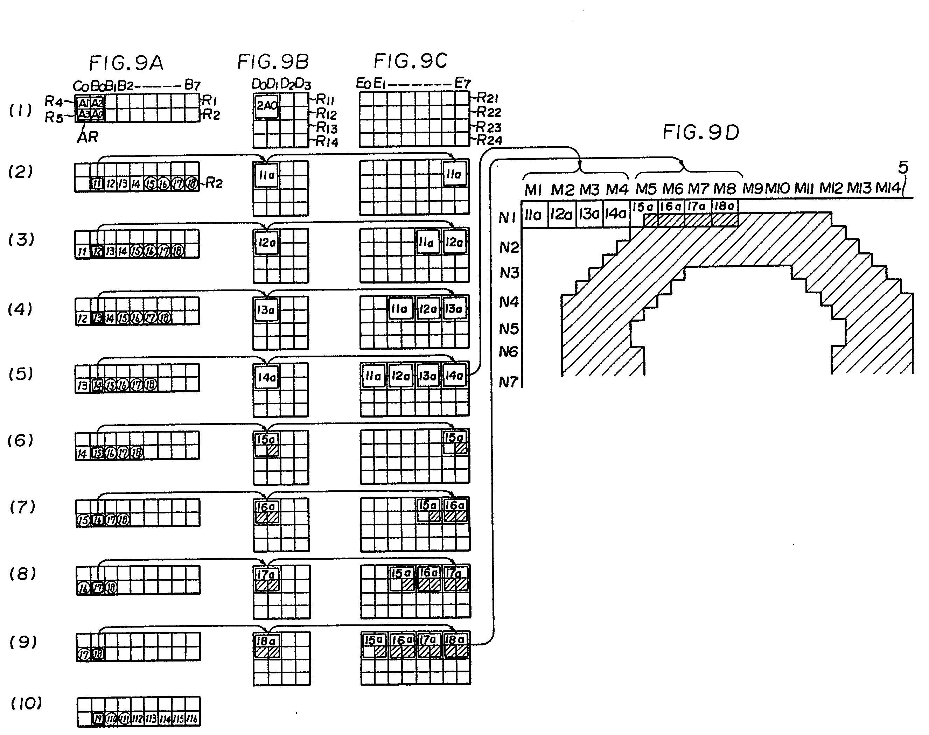

In a manner described above, one of the enlarged partial patterns 2AO to 4AO shown in Figs.7B-(1) to 7B-(16), Figs. 7C-(1) to 7C-(16), and Figs.7D-(1) to 7D-(16) is generated in accordance with a corresponding square pattern GO and a predetermined magnifying rate. In this embodiment, all of the enlarged partial patterns mentioned above are previously stored in the ROM 6, and a required one of them is read out of a location of the ROM 6. The location is addressed by an address data produced in accordance with the square pattern GO and the magnifying rate. In order to produce the address data, bit data representative of the four elements AO, A1, A2 and A3 of the square pattern GO are set in the address register AR as shown in Fig.8A. More specifically, a bit data, which indicates whether the element AO is black ("1") or white ("O"), is set in the last stage BO of the input shift register $R_2$. And three other bit data, which indicate whether the elements A1, A3 and A2 are black or white, are set in the registers R4, R5 and the last stage BO of the register R1, respectively. On the other hand, the magnifying rate in the horizontal direction is set in the register R7 and at the same time the magnifying rate in the vertical direction is set in the register R8.

Figs.8B through 8D show where the patterns 2AO, 3AO and 4AO read out of the ROM 6 are temporarily stored. The pattern 2AO is stored into the stages DO and D1 of the shift registers R11 and R12. Similarly, the pattern 3AO is stored into the stages DO, D1 and D2 of the registers R11, R12 and R13, and the pattern 4AO is stored into the stages DO, D1, D2 and D3 of the registers R11, R12, R13 and R14.

Now, an enlarging processing, in which the CPU1 controls the character generator 3, pattern enlarging circuit 4 and output buffer 5, will be described with reference to Figs.9A through 9D. Figs.9A-(1), 9B-(1) and 9C-(1) illustrate the registers R1, R2, R4, R5, R11 to R14 and R21 to R24. Figs.9A-

12.

-(2) to 9A-(9), Figs.9B-(2) to 9B-(9) and Figs.9C-(2) to 9C-(9) show the sequential change of the contents of the above-mentioned registers in the enlarging processing by which the elements in the row nl and columns ml to m8 of a fundamental character pattern representative of a numeral "9" are enlarged twofold. Fig.9A-(10) shows the contents of the registers Rl and R2 when the elements in the row nl and columns m9 to ml6 are set in these registers. And Fig.9D shows the contents of the output buffer 5 when the enlarging processing for the elements in the row nl and columns ml to m8 of the fundamental character pattern above-mentioned is complete. In these figures, the circled reference numerals indicate that the elements corresponding to these numerals are black or "1" states. Besides, the reference numerals not circled indicate that the elements corresponding to these are white or "0" states.

At the beginning of the enlarging processing, the CPU1 clears the registers Rl, R2, R4 and R5. Then the CPU1 controls the character generator 3 so as to cause it to generate a basic character pattern corresponding to the numeral "9", and transfers the elements ll through 18 thereof to the register R2 so that the elements ll to 18 are stored into the stages B0 to B7 of the register $R_2$, respectively. Thus the first element ll is stored in the register AR as the element A0 to be enlarged (see Fig.9A-(2)). In this case, the contents of the register AR, which represent a square pattern G0, coincide with ones shown in FIG.7A-(1), and therefore all of the output signals a0 to a3 are rendered "O". As a result, four "O" bits representing the enlarged
partial pattern 2AO shown in Fig.7B-(1) are read out of
the ROM 6 and stored into the stages DO, Dl of the registers
R11, R12 (see Fig.9B-(2)). Then, all of the contents of
the registers R11 to R14 and R21 to R24 are shifted by two
bits to left, whereby the enlarged partial pattern of the
element 11, which is referred as a pattern 11a, is set in
the stages E6, E7 of the registers R21, R22 (see Fig.9C-(2)).

Next, the contents of the registers R1, R2, R4 and R5
are shifted by 1 bit to left in order to enlarge the element
12. In this case, a square pattern GO ,also coincides with
one shown in Fig.7A-(1), and therefore a pattern 12a compos-
ed of four "O" bits, i.e. four white elements, is read out
of the ROM 6 and set in the stages E6, E7 of the registers
R21, R22 in a manner described above for the pattern 11a.
Further, in respect of the elements 13, 14 the similar
processings are carried out. As a result, four patterns
11a to 14a, each of which represents four white elements,
are stored in the registers R21, R22 whereupon the contents
of these registers R21 and R22 are transferred to the area
of the output buffer 5 defined by the row N1 and columns M1
to M4 when the registers R21 and R22 are fully loaded (see
Fig.9D).

Next, when the contents of the registers R1, R2, R4
and R5 are further shifted by one bit, the element 15 re-
presentative of a black element comes into an enlargement
position. In this case, the pattern GO corresponding to
the element 15 coincides with the one shown in Fig.7A-(4), so that the output signals al to a3 of the register AR are rendered "O" while the output signal a0 thereof is rendered "1". Therefore the pattern 2AO shown in Fig.7B-(4), which corresponds to binary signals "O", "O", "O", "1", is read out of the ROM 6 and set in the stages DO and Dl of the registers Rll and Rl2, whereby the enlarged partial pattern 15a is formed. Then the partial pattern 15a is shifted by two bits and set in the stages E6 and E7 of the registers R21 and R22.

Next, when the contents of the register Rl, R2, R4 and R5 are further shifted by one bit, the element 16 representative of a black element comes into an enlargement position as in shown in Fig.9A-(7). In this case, the output signals a0, al, a2 and a3 are rendered "1", "O", "O", "1" respectively, since the square pattern GO set in the register AR coincides with the one shown in Fig.7A-(8). Therefore, the partial pattern 2AO shown in Fig.7B-(8), which corresponds to binary signals "O", "O", "1", "1", is read out of the ROM 6 and set in the stages DO and Dl of the registers Rll and Rl2, thereby forming the partial pattern 16a. Then the partial pattern 16a is shifted by two bits and set in the stages E6 and E7 of the registers R21 and R22. The elements 17 and 18 are processed in a manner described above for the element 16, so that the partial patterns 17a and 18a, which are shown in Figs.9B -(8) and 9B-(9) respectively, are formed and shifted into the registers R21 and R22. And the contents of the registers R21 and R22 are transferred to the area of the output buffer 5 defined by the row N1 and columns M5 to M8 when the registers R21 and R22 become fully loaded.

Following the completion of the above described first enlarging processing, which has been carried out for the part of the fundamental character pattern (Fig.4) corresponding to the row n1 and columns m1 to m8, the elements 19 through 116 of the fundamental character pattern are set in the register R2 as shown in Fig.9A-(10). Then the second enlarging processing, which is effective for enlarging the elements 19 to 116 corresponding to the part defined by the row n1 and columns m9 to m16, is carried out in a manner described above for the elements 11 to 18. Similarly, the third enlarging processing for the enlargement of the elements 21 to 28 through the thirty second enlarging processing for the enlargement of the elements 169 to 1616 are carried out sequentially. In the third processing, the elements 11 to 18 and 21 to 28 are set in the registers R1 and R2, respectively. Thus, in respect of each row of the fundamental character pattern, two bytes of element are transferred twice from the character generator 3 to the registers R1 and R2, and the enlarging processings are performed for each of the elements in accordance with the corresponding square pattern GO as described above.

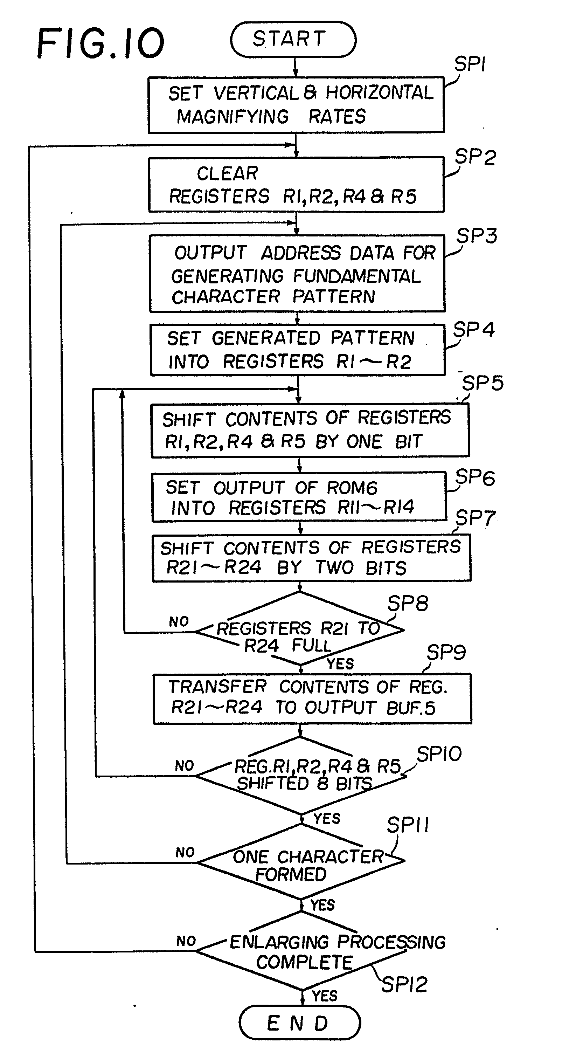

The enlarging processings at the horizontal magnifying rate of "2" will be well understood by referring to the flow chart illustrated in Fig.10. This flow chart can also be used to understand the enlarging processings at the horizontal magnifying rate of "3" and "4" only by changing each shift count of the registers R21 to R24 in the step SP7 from "2" to "3" and "4", respectively.

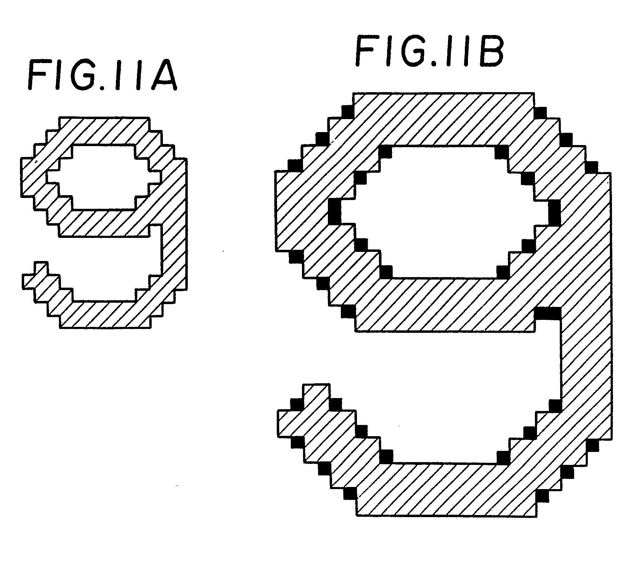

Fig.11A also illustrates the fundamental character pattern of an Arabic numeral "9" which has already be shown in Fig.4, and Fig.11B illustrates a resultant enlarged character pattern of the same at the magnifying rate of "2". In Fig.11B the elements indicated as shadows are the ones advantageously added in accordance with the present invention. It is apparent from this figure that the outline of the enlarged character pattern is significantly smoothed.

According to this invention, it is also possible to enlarge a fundamental character pattern at different magnifying rates in the horizontal and vertical directions by storing appropriate partial patterns in the ROM.

What is claimed is:

1.   A method of enlarging character patterns, characterised in that it comprises the steps of;

(a)   generating a fundamental character pattern representative of a character to be enlarged, said fundamental
character pattern being composed of a dot-matrix in which
said character is represented by vertical strokes, horizontal
strokes and slant strokes oriented at an angle of 45°
with respect to said vertical and horizontal strokes;

(b)   forming a square pattern in accordance with each dot
element of said fundamental character pattern, each square
pattern being composed of four adjacent dot elements one of
which is to be enlarged;

(c)   reading an enlarged partial pattern corresponding
to said dot element to be enlarged out of a storage means,
into which all kinds of enlarged partial patterns have
previously been stored, in accordance with said square
pattern and a magnifying rate, said enlarged partial patterns
being predetermined in accordance with the corresponding
square pattern and magnifying rate; and

(d)   combining said enlarged partial patterns read
out of said storage means so that an enlarged character
pattern corresponding to said fundamental character pattern
is formed

(e)   whereby outlines of each stroke of said enlarged
character pattern are interpolated to be smooth.

2.    An apparatus for enlarging character patterns, characterised in that it comprises;

(a)   character pattern generating means for generating a fundamental character pattern representative of a character to be enlarged, said fundamental character pattern being composed of a dot-matrix in which said character is represented by vertical strokes, horizontal strokes and slant strokes oriented at an angle of 45° with respect to said vertical and horizontal strokes;

(b)   square pattern forming means for forming a square pattern in accordance with each dot element of said fundamental character pattern, said square pattern being composed of four adjacent dot elements one of which is to be enlarged;

(c)   storage means for previously storing an enlarged partial pattern with respect to each kind of said square patterns, each enlarged partial pattern being predetermined in accordance with the corresponding square pattern and a magnifying rate;

(d)   means for reading said enlarged partial pattern out of said storage means in accordance with said square pattern and magnifying rate; and

(e)   means for combining said enlarged partial patterns read out of said storage means so that an enlarged character pattern corresponding to said fundamental character pattern is formed

(f)   whereby outlines of each stroke of said enlarged character pattern are interpolated to be smooth.

3.    An apparatus according to claim 2, in which said square pattern forming means is composed of last stages of two input shift registers, into which two rows of said fundamental character pattern are stored, and two one-bit registers connected to said last stages, respectively.

4.    An apparatus according to claim 3, in which said means for reading said enlarged partial pattern comprises an address data generating means which is composed of said last stages of said two input shift registers, said two one-bit registers and a rate register into which said magnifying rate is introduced, said address data generating means supplying its output to said storage means.

5.    An apparatus according to claim 2, 3 or 4, in which said storage means is composed of a read only memory.

6.    An apparatus according to any of claims 2 to 5, in which said means for combining said enlarged partial patterns together comprises output shift registers and an output buffer which accumulates data shifted out of said output shift registers, said output shift registers receiving said enlarged partial patterns read out of said storage means.

0100872

1/9

FIG.IA

FIG.IB

FIG.IC

FIG.ID

# FIG.2

A A A A A

R R R R

# FIG.3

CPU — 1

I/O CONTROLLER — 2

CHARACTER PATTERN GENERATOR — 3

PATTERN ENLARGING CIRCUIT — 4

OUTPUT BUFFER — 5

# FIG. 4

# FIG.8A

# FIG.8B

# FIG.8C

# FIG.8D

FIG.5

# FIG.6A

# FIG.6B

FIG.7A  FIG.7B  FIG.7C  FIG.7D

(1) (2) (3) (4) (5) (6) (7) (8)

(9) (10) (11) (12) (13) (14) (15) (16)

A1 A3 G0 A0 A2 2A0 3A0 4A0

FIG.9A   FIG.9B   FIG.9C   FIG.9D

0100872

**FIG.10**

START

SP1 — SET VERTICAL & HORIZONTAL MAGNIFYING RATES

SP2 — CLEAR REGISTERS R1,R2,R4 & R5

SP3 — OUTPUT ADDRESS DATA FOR GENERATING FUNDAMENTAL CHARACTER PATTERN

SP4 — SET GENERATED PATTERN INTO REGISTERS R1 ~ R2

SP5 — SHIFT CONTENTS OF REGISTERS R1,R2,R4 & R5 BY ONE BIT

SP6 — SET OUTPUT OF ROM6 INTO REGISTERS R11 ~ R14

SP7 — SHIFT CONTENTS OF REGISTERS R21 ~ R24 BY TWO BITS

SP8 — REGISTERS R21 TO R24 FULL — NO / YES

SP9 — TRANSFER CONTENTS OF REG. R21 ~ R24 TO OUTPUT BUF.5

SP10 — REG.R1,R2,R4 & R5 SHIFTED 8 BITS — NO / YES

SP11 — ONE CHARACTER FORMED — NO / YES

SP12 — ENLARGING PROCESSING COMPLETE — NO / YES

END

9/9

FIG.IIA

FIG.IIB